# EUROPEAN PATENT APPLICATION

(11) **EP 4 614 298 A1**
(43) Date of publication of application: **10.09.2025**
(21) Application number: 23884989.7
(22) Date of filing: 01.11.2023
(51) Int. Cl.: G06F 3/04842

(54) **SCREEN CAPTURE PROCESSING METHOD AND ELECTRONIC DEVICE**

(30) Priority: 03.11.2022 CN 202211372670
(71) Applicant: Huawei Technologies Co., Ltd., Shenzhen, Guangdong 518129 (CN)
(72) Inventor: WANG, Shufan, Shenzhen, Guangdong 518129 (CN)
(74) Representative: Maiwald GmbH
(86) International application number: PCT/CN2023/129064
(87) International publication number: WO 2024/094063

(57) **Abstract**

This application provides a screenshot processing method and an electronic device. The method includes: after a screenshot operation is detected, obtaining position information of a screenshot box on a screenshot page and layout information of the screenshot page (S401), where the screenshot page includes one or more page elements, and the layout information of the screenshot page includes a level relationship and position information of the one or more page elements; determining one or more target page elements from the one or more page elements based on the position information of the screenshot box on the screenshot page and the layout information of the screenshot page (S402); and generating a first screenshot image based on the one or more target page elements (S403). According to the described method, completeness of screenshot content can be ensured, helping improve screenshot effect and user experience.

## Description

This application claims priority to Chinese Patent Application No. 202211372670.7, filed with the China National Intellectual Property Administration on November 3, 2022 and entitled "SCREENSHOT PROCESSING METHOD AND ELECTRONIC DEVICE", which is incorporated herein by reference in its entirety.

### TECHNICAL FIELD

Embodiments of this application relate to the field of computer technologies, and in particular, to a screenshot processing method and an electronic device.

### BACKGROUND

A screenshot function of an electronic device is a function that is highly popular with and highly used by user. The screenshot function is used to capture information on a screen of the electronic device, and is a manner for capturing a picture or a text. When using the electronic device, the user may use the screenshot function to quickly save useful information for future review, or may use the screenshot function to send content on the screen to another user for information sharing.

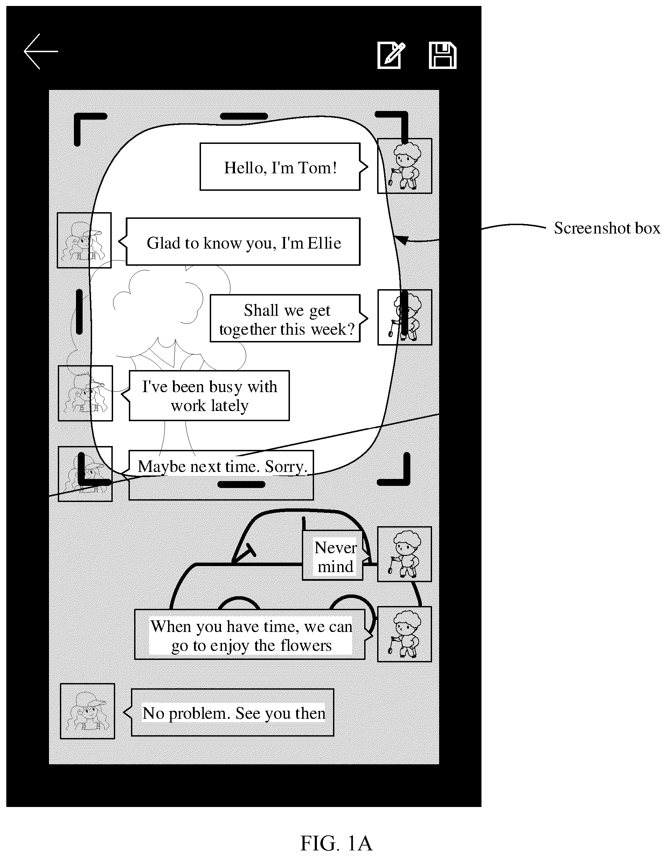

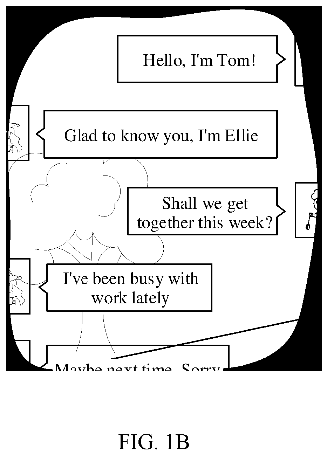

Currently, the user may perform a screenshot operation in a manner of taking a free screenshot by using a knuckle. As shown in FIG. 1A, a user may specify a screenshot range (that is, a screenshot box) in a chat interface by using a knuckle, to generate a screenshot shown in FIG. 1B. However, in this manner, completeness of screenshot content (such as a background image and a text) cannot be ensured, thereby reducing user experience.

### SUMMARY

This application provides a screenshot processing method and an electronic device, to ensure completeness of screenshot content, and help improve screenshot effect and user experience.

According to a first aspect, a screenshot processing method is provided. The method includes: after a screenshot operation is detected, obtaining position information of a screenshot box on a screenshot page and layout information of the screenshot page, where the screenshot page includes one or more page elements, and the layout information of the screenshot page includes a level relationship and position information of the one or more page elements; determining one or more target page elements from the one or more page elements based on the position information of the screenshot box on the screenshot page and the layout information of the screenshot page; and generating a first screenshot image based on the one or more target page elements.

In the method described in the first aspect, each page element is analyzed and determined, and completeness of the page element and an association between page elements are also considered when a screenshot range specified by the user is considered, instead of directly retaining only screenshot content specified by the user, thereby avoiding a case in which some page elements are abandoned to cause incompleteness. Therefore, the method can be used to ensure completeness of the screenshot content, and improve screenshot effect and user experience.

In a possible implementation, the determining one or more target page elements from the one or more page elements based on the position information of the screenshot box on the screenshot page and the layout information of the screenshot page includes: traversing the page elements in descending order of levels of the page elements, and determining, based on the position information of the screenshot box on the screenshot page and position information of a currently traversed first page element, whether the screenshot box is completely included in the first page element; and when the screenshot box is completely included in the first page element, determining the first page element as the target page element. Based on this manner, page elements on the screenshot page can be effectively analyzed for determining, to ensure completeness of screenshot content.

In a possible implementation, the method further includes: when the screenshot box is not completely included in the first page element, and the screenshot box and the first page element have intersection points, determining whether second page elements exist on the screenshot page, where the second page elements are page elements at levels lower than a level of the first page element; when the second page elements exist, traversing the second page elements in ascending order of the levels of the second page elements, and determining whether an overlapping area between a currently traversed second page element and the screenshot box is greater than a preset value; and when the overlapping area between the currently traversed second page element and the screenshot box is greater than the preset value, determining the currently traversed second page element as the target page element. Based on this manner, page elements in the screenshot page are further selected, and necessary page elements are retained, to improve screenshot effect.

In a possible implementation, after all the second page elements are traversed, the method further includes: determining whether an overlapping area between the first page element and the screenshot box is greater than the preset value; and when the overlapping area between the first page element and the screenshot box is greater than the preset value, determining the first page element as the target page element. Based on this manner, completeness of screenshot content can be ensured.

In a possible implementation, the method further includes: when the second page elements do not exist, determining whether the overlapping area between the first page element and the screenshot box is greater than the preset value; and when the overlapping area between the first page element and the screenshot box is greater than the preset value, determining the first page element as the target page element. Based on this manner, completeness of screenshot content can be ensured.

In a possible implementation, the generating a first screenshot image based on the one or more target page elements includes: generating a preview screenshot image based on the one or more target page elements, where the preview screenshot image includes the one or more target page elements; displaying the preview screenshot image; when a delete operation performed by a user on a third page element in the preview screenshot image is received, removing, from the preview screenshot image, the third page element deleted through the delete operation, to obtain the first screenshot image, where the third page element is any one of the one or more target page elements; and when a delete operation performed by the user on the third page element is not received, determining the preview screenshot image as the first screenshot image. Based on this manner, screenshot information required by the user can be further ensured, flexibility of a screenshot image is improved, and user experience is improved.

In a possible implementation, the method further includes: displaying a screenshot saving interface, where the screenshot saving interface includes a first option and a second option; when a select operation performed by the user on the first option is received, generating a second screenshot image, and saving the first screenshot image and the second screenshot image, where the second screenshot image includes image content in the screenshot box on the screenshot page, and does not include image content outside the screenshot box on the screenshot page; and saving the first screenshot image when the select operation performed by the user on the second option is received. Based on this manner, the user can select a screenshot image that needs to be saved, thereby improving user experience.

In a possible implementation, the method further includes: determining, in the first screenshot image, text information that is not included in the screenshot box; and performing blur processing on the text information to obtain a third screenshot image. Based on this manner, completeness of screenshot content is ensured, and accuracy and privacy of the screenshot image are improved, thereby improving user experience.

According to a second aspect, an electronic device is provided, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the screenshot processing method according to any one of the possible implementations of the first aspect.

According to a third aspect, a screenshot processing apparatus is provided. The screenshot processing apparatus may be an electronic device, or may be an apparatus in an electronic device, or may be an apparatus that can be used in a manner of matching an electronic device. The screenshot processing apparatus may alternatively be a chip system. The screenshot processing apparatus may perform the method according to the first aspect. A function of the screenshot processing apparatus may be implemented by hardware, or may be implemented by hardware executing corresponding software. The hardware or the software includes one or more units or modules corresponding to the foregoing function. The unit or module may be software and/or hardware. For operations performed by the screenshot processing apparatus and beneficial effects, refer to the method according to the first aspect and the beneficial effects, the details of which are omitted here.

According to a fourth aspect, a computer storage medium is provided, including computer instructions. When the computer instructions are run on an electronic device, the electronic device is enabled to perform the screenshot processing method according to any one of the possible implementations of the first aspect.

According to a fifth aspect, a computer program product is provided. When the computer program product runs on a computer, the computer is enabled to perform the screenshot processing method according to any one of the possible implementations of any of the foregoing aspects.

### BRIEF DESCRIPTION OF DRAWINGS

FIG. 1A shows a user interface for screenshot according to an embodiment of this application;
FIG. 1B is a diagram of a screenshot image according to an embodiment of this application;
FIG. 2 is a diagram of a hardware structure of an electronic device according to an embodiment of this application;
FIG. 3 is a block diagram of a software structure of an electronic device according to an embodiment of this application;
FIG. 4 is a schematic flowchart of a screenshot processing method according to an embodiment of this application;
FIG. 5 is a diagram of layout information on a screenshot page according to an embodiment of this application;
FIG. 6A is a diagram of layout information on another screenshot page according to an embodiment of this application;
FIG. 6B is a diagram of layout information on another screenshot page according to an embodiment of this application;
FIG. 6C is a diagram of layout information on another screenshot page according to an embodiment of this application;
FIG. 6D is a diagram of layout information on another screenshot page according to an embodiment of this application;
FIG. 6E is a diagram of another screenshot image according to an embodiment of this application;
FIG. 7A is a diagram of another screenshot image according to an embodiment of this application;
FIG. 7B is a diagram of another screenshot image according to an embodiment of this application;
FIG. 8A is a diagram of another screenshot image according to an embodiment of this application;
FIG. 8B is a diagram of another screenshot image according to an embodiment of this application;
FIG. 8C shows a user interface for background recommendation according to an embodiment of this application;
FIG. 8D is a diagram of another screenshot image according to an embodiment of this application;
FIG. 8E is a diagram of another screenshot image according to an embodiment of this application;
FIG. 9 shows a user interface for saving a screenshot according to an embodiment of this application;
FIG. 10A shows another user interface for screenshot according to an embodiment of this application;
FIG. 10B is a diagram of another screenshot image according to an embodiment of this application;
FIG. 10C is a diagram of another screenshot image according to an embodiment of this application; and
FIG. 11 is a diagram of a structure of a screenshot processing apparatus according to an embodiment of this application.

### DESCRIPTION OF EMBODIMENTS

The technical solutions according to embodiments of this application are clearly described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

To ensure completeness of screenshot content and help improve screenshot effect and user experience, this application provides a screenshot processing method. In specific implementation, the screenshot processing method may be performed by an electronic device 100. The electronic device 100 may be a mobile phone, a tablet computer, a notebook computer, a wearable electronic device (such as a smartwatch) having a wireless communication function, or the like, but is not limited thereto. The electronic device 100 is provided with a display, and may be installed with a preset application (application, APP). The user may perform screenshot processing on any page by using the display, to generate a screenshot image (namely, a screenshot), so as to capture information on the display of the electronic device.

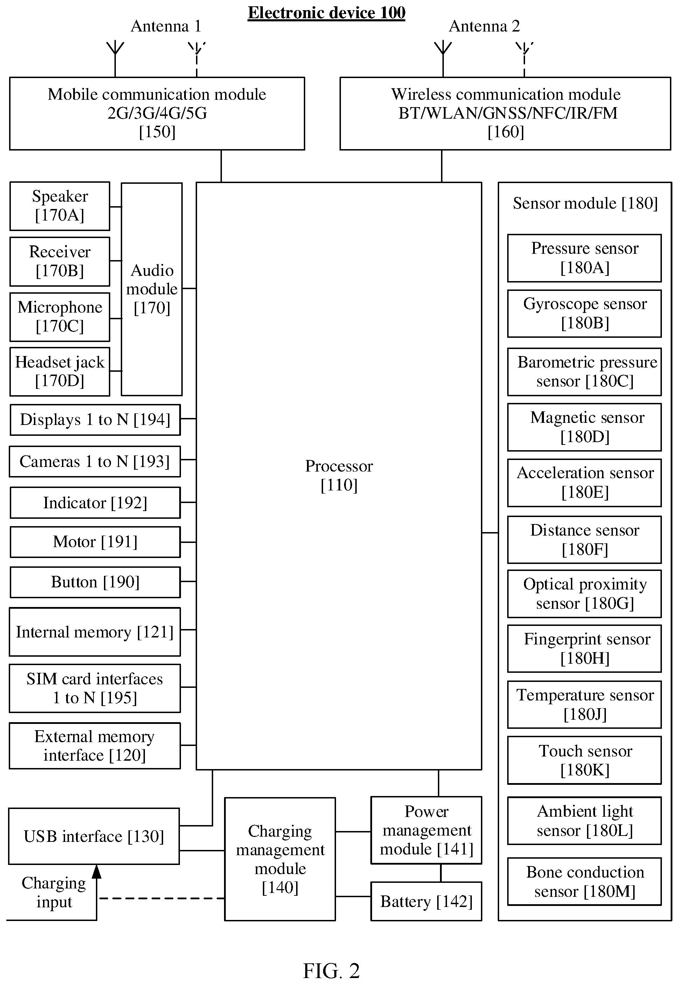

The following describes a hardware structure of the electronic device 100. FIG. 2 is a diagram of a hardware structure of the electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency. The processor 110 invokes the instructions or data stored in the memory, so that the electronic device 100 performs a screenshot processing method performed by an electronic device in the following method embodiments.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger.

The power management module 141 is configured to connect to the battery 142, the charging management module 140, and the processor 110. The power management module 141 receives input of the battery 142 and/or the charging management module 140, and supplies power to the processor 110, the internal memory 121, an external memory, the display 194, the camera 193, the wireless communication module 160, and the like. In some other embodiments, the power management module 141 may also be disposed in the processor 110.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The wireless communication module 160 may provide a wireless communication solution that is applied to the electronic device 100 and that includes a wireless local area network (wireless local area network, WLAN) (such as a Wi-Fi network), Bluetooth (Bluetooth, BT), BLE advertising, a global navigation satellite system (global navigation satellite system, GNSS), frequency modulation (frequency modulation, FM), near field communication (near field communication, NFC), an infrared technology (infrared, IR), or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like. The ISP is configured to process data fed back by the camera 193. The camera 193 is configured to capture a static image or a video. The digital signal processor is configured to process a digital signal, and may process another digital signal in addition to a digital image signal. The video codec is configured to compress or decompress a digital video. The electronic device 100 may support one or more video codecs.

The NPU is a neural-network (neural-network, NN) computing processor. The NPU quickly processes input information by referring to a structure of a biological neural network, for example, with reference to a transfer mode between human brain neurons, and may further continuously perform self-learning.

The external memory interface 120 may be configured to connect to an external memory card, for example, a micro SD card, to extend a storage capability of the electronic device 100. The external memory card communicates with the processor 110 through the external memory interface 120, to implement a data storage function.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function), and the like. The data storage area may store data (for example, audio data) created when the electronic device 100 is used, and the like. In addition, the internal memory 121 may include a high-speed random access memory, and may further include a non-volatile memory, for example, a flash memory device.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset. The pressure sensor 180A is configured to sense a pressure signal, and can convert the pressure signal into an electrical signal. In some embodiments, the pressure sensor 180A may be disposed on the display 194. The gyroscope sensor 180B may be configured to determine a moving posture of the electronic device 100. The barometric pressure sensor 180C is configured to measure barometric pressure. The magnetic sensor 180D includes a Hall sensor. The acceleration sensor 180E may detect accelerations of the electronic device 100 in various directions (usually on three axes). The distance sensor 180F is configured to measure a distance. The optical proximity sensor 180G may include, for example, a light emitting diode (LED) and an optical detector. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

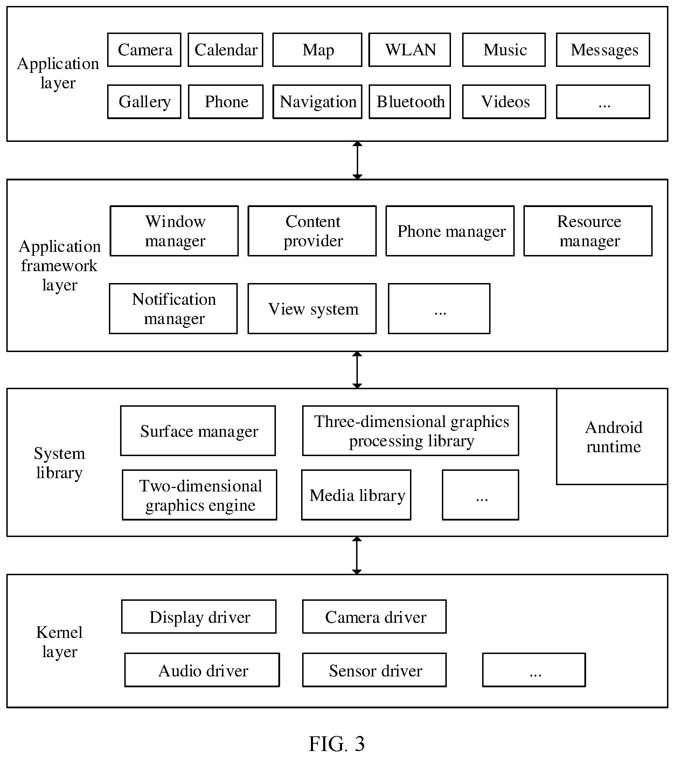

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100. FIG. 3 is a block diagram of the software structure of the electronic device 100 according to this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer.

The application layer may include a series of application packages. As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions. As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

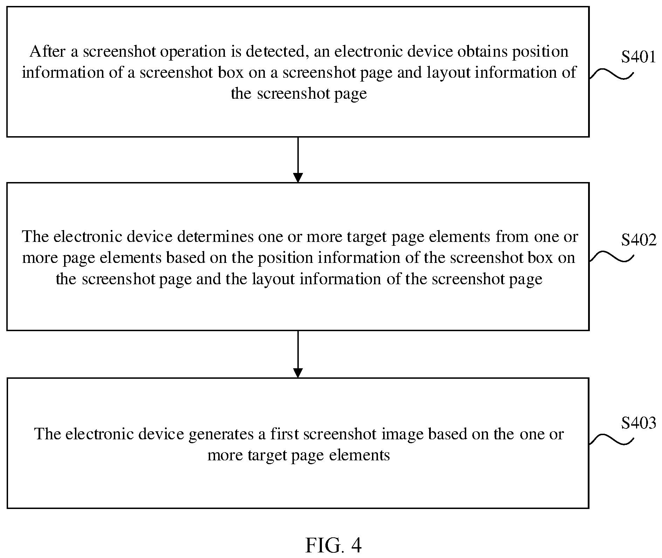

The following further describes in detail a screenshot processing method provided in this application. FIG. 4 is a schematic flowchart of a screenshot processing method according to an embodiment of this application. As shown in FIG. 4, the screenshot processing method includes the following steps S401 to S403. An execution body of the method shown in FIG. 4 includes an electronic device (for example, the electronic device 100 in FIG. 2). Alternatively, an execution body of the method shown in FIG. 4 includes a chip in the electronic device. FIG. 4 is described by using an example in which an electronic device is the execution body.

S401: After a screenshot operation is detected, the electronic device obtains position information of a screenshot box on a screenshot page and layout information of the screenshot page.

In this embodiment of this application, the screenshot operation may be a manner of taking a free screenshot by using a knuckle, or may be another screenshot manner. This is not limited herein. After a screenshot operation of a user is detected, the electronic device obtains position information of a screenshot box specified by the user on the screenshot page. As shown in FIG. 1A, the user may tap a screen by using a knuckle, keep the knuckle not leaving the screen, and specify a closed shape on the current page. The closed shape is the screenshot box, and a current page is the screenshot page.

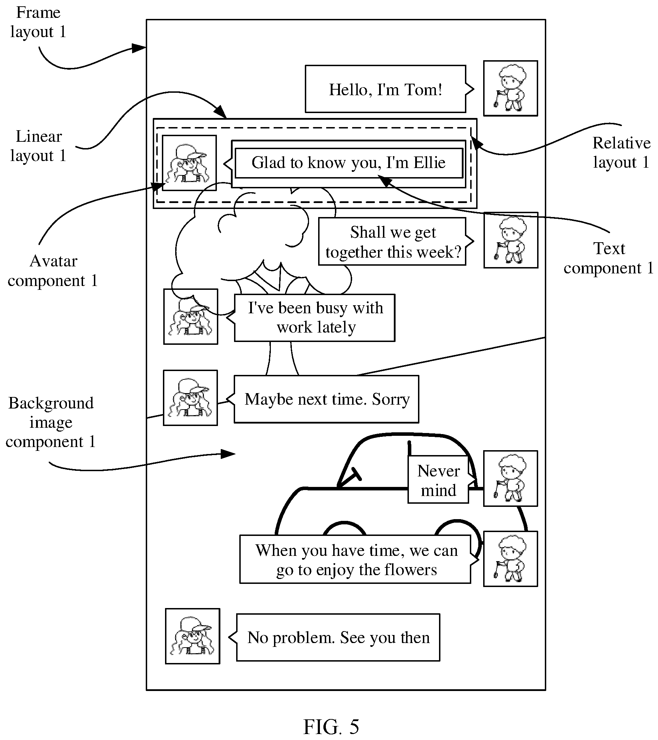

The screenshot page includes one or more page elements, and the layout information of the screenshot page includes a level relationship and position information of the one or more page elements. The page element herein means each element that constitutes a screenshot page, for example, a layout component (such as a frame layout and a linear layout), a display component (such as an image and a text), and an interaction component (such as a button). Each page element has a corresponding level relationship and corresponding position information. As shown in FIG. 5, the screenshot page includes page elements such as a frame layout, a plurality of linear layouts, a plurality of relative layouts, a plurality of avatar components, a plurality of background image components, and a plurality of text components. Using a frame layout 1, a linear layout 1, a relative layout 1, an avatar component 1, a background image component 1, and a text component 1 as an example, the layout information of the screenshot page may include: the frame layout 1 being at a highest level, and the frame layout 1 including the background image component 1; a level of the linear layout 1 being lower than a level of the frame layout 1; a level of the relative layout 1 being lower than a level of the linear layout 1, and the relative layout 1 including the avatar component 1 and the text component 1; and position information of the linear layout 1, the relative layout 1, the avatar component 1, the background image component 1, and the text component 1 on the screenshot page.

It should be noted that a layout component may be considered as a component container with different layout specifications. Any component may be placed in the layout component. The frame layout is a blank area developed on the screen. When a component is added to the frame layout, the component is placed in an upper left corner of the area by default. A size of the frame layout is determined by a largest subcomponent. The linear layout means that components placed in the linear layout are arranged vertically or horizontally, in other words, the components placed in the linear layout are controlled to be arranged horizontally or vertically. The relative layout indicates that a position of a component is determined by a sibling component (to be specific, components in a same layout) and a parent container.

Optionally, the method further includes: when the electronic device receives first adjustment information, updating the screenshot box based on the first adjustment information. To be specific, a size or a shape of the screenshot box may be manually adjusted by the user, or may be adaptively adjusted by the electronic device. This is not limited herein. Based on this manner, flexibility of the screenshot box can be improved.

S402: The electronic device determines one or more target page elements from the one or more page elements based on the position information of the screenshot box on the screenshot page and the layout information of the screenshot page.

In this embodiment of this application, the electronic device selects page elements on the screenshot page by using the position information of the screenshot box on the screenshot page and the layout information of the screenshot page, and retrains necessary page elements, to improve screenshot effect and user experience.

In a possible implementation, a specific implementation in which the electronic device determines one or more target page elements from the one or more page elements based on the position information of the screenshot box on the screenshot page and the layout information of the screenshot page may be as follows: The electronic device traverses the page elements in descending order of levels of the page elements, and determines, based on the position information of the screenshot box on the screenshot page and position information of a currently traversed first page element, whether the screenshot box is completely included in the first page element; and when the screenshot box is completely included in the first page element, determines the first page element as the target page element. Based on this manner, page elements on the screenshot page can be effectively analyzed for determining, to ensure completeness of screenshot content.

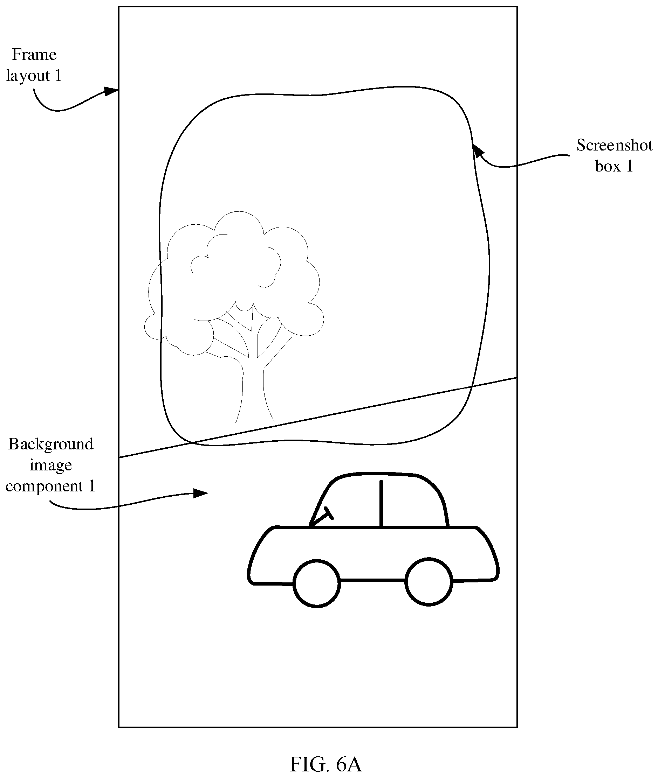

For example, levels of the page elements on the screenshot page are sequentially: the frame layout 1, the linear layout 1, and the relative layout 1 in descending order. The frame layout 1 includes the background image component 1, and the relative layout 1 includes the avatar component 1 and the text component 1. The electronic device traverses the page elements in descending order of the levels starting from the frame layout 1. As shown in FIG. 6A, a currently traversed page element is the frame layout 1. The electronic device determines, based on the position information of the screenshot box on the screenshot page and position information of the currently traversed frame layout 1, that the screenshot box is completely included in the frame layout 1, and therefore determines the frame layout 1 as the target page element. Further, the electronic device determines, based on the position information of the screenshot box on the screenshot page and position information of the background image component 1 in the currently traversed frame layout 1, that the screenshot box is also completely included in the background image component 1. Therefore, the background image component 1 is also determined as the target page element.

Optionally, the method further includes: When the screenshot box is not completely included in the first page element, and the screenshot box and the first page element have intersection points, the electronic device determines whether second page elements exist on the screenshot page. The second page elements are page elements at levels lower than a level of the first page element. When the second page elements exist, the electronic device traverses the second page elements in ascending order of the levels of the second page elements, and determines whether an overlapping area between a currently traversed second page element and the screenshot box is greater than a preset value. When the overlapping area between the currently traversed second page element and the screenshot box is greater than the preset value, the electronic device determines the currently traversed second page element as the target page element. Based on this manner, page elements in the screenshot page are further selected, and necessary page elements are retained, to improve screenshot effect.

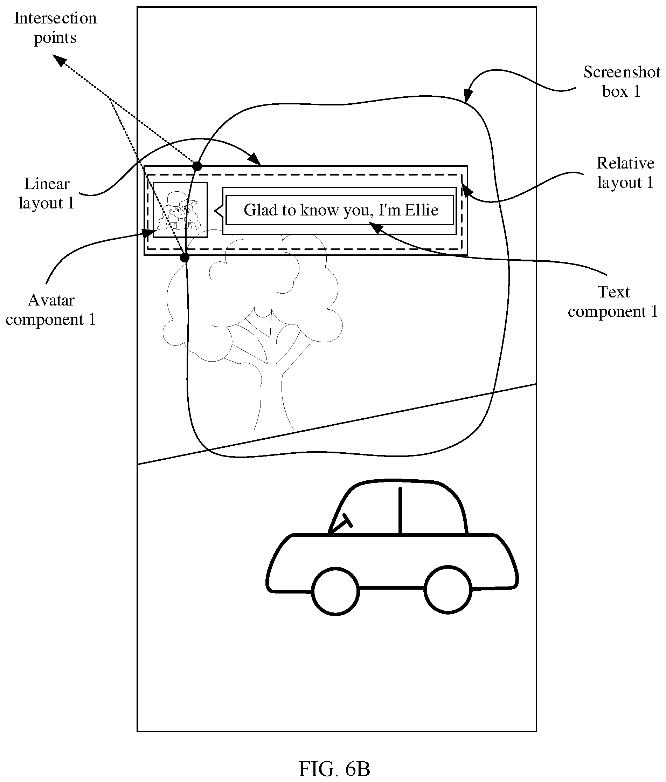

For example, the electronic device continues to traverse page elements in descending order of levels. As shown in FIG. 6B, a currently traversed page element is the linear layout 1. The electronic device determines, based on the position information of the screenshot box on the screenshot page and position information of the currently traversed linear layout 1, that the screenshot box is not completely included in the linear layout 1, but there are intersection points between the screenshot box and the linear layout 1. Therefore, it needs to be further determined whether there is a page element at a level lower than a level of the linear layout 1. Because the relative layout 1 is further included at a level lower than a level of the linear layout 1, and the avatar component 1 and the text component 1 are further included at the level lower than the level of the relative layout 1, to be specific, the second page elements are the relative layout 1, the avatar component 1, and the text component 1.

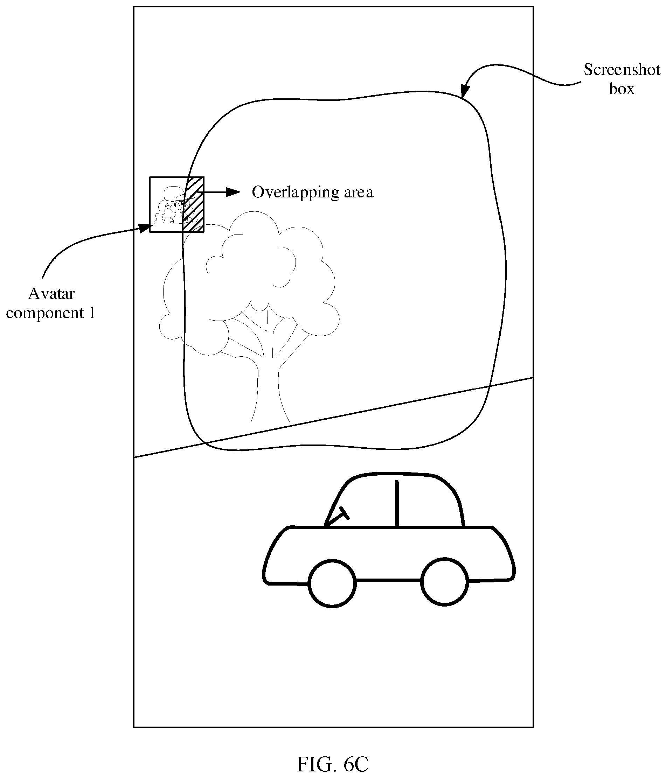

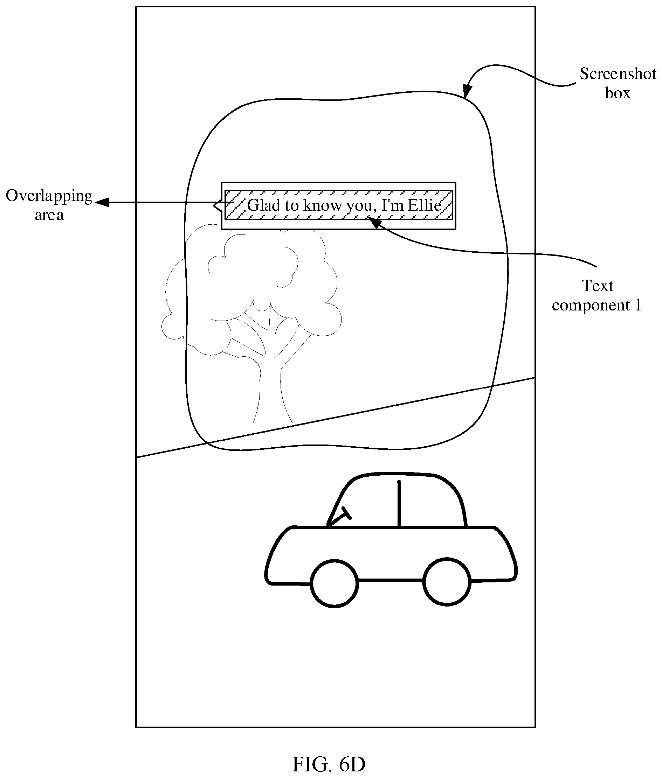

Further, the electronic device needs to traverse the second page elements in ascending order of the levels of the second page elements, to be specific, traverse the second page elements in order from the avatar component 1, to the text component 1, and then to the relative layout 1. It is assumed that the preset value is a half of an area of a currently traversed page element. As shown in FIG. 6C, the currently traversed second page element is the avatar component 1. It may be determined that an overlapping area between the avatar component 1 and the screenshot box is less than a half of an area of the avatar component 1, and the avatar component 1 cannot be determined as the target page element. Further, as shown in FIG. 6D, the currently traversed second page element is the text component 1. It may be determined that an overlapping area between the text component 1 and the screenshot box is greater than a half of an area of the text component 1, and the text component 1 is determined as the target page element. Further, the currently traversed second page element is the relative layout 1. Similarly, it may be learned from FIG. 6B that an overlapping area between the relative layout 1 and the screenshot box is greater than a half of an area of the relative layout 1, and the relative layout 1 is also determined as the target page element.

Optionally, after all the second page elements are traversed, the method further includes: The electronic device determines whether an overlapping area between the first page element and the screenshot box is greater than the preset value. When the overlapping area between the first page element and the screenshot box is greater than the preset value, the electronic device determines the first page element as the target page element. Based on this manner, completeness of screenshot content can be ensured.

For example, after the electronic device traverses all the second page elements, it may be learned from FIG. 6B that an overlapping area between the linear layout 1 and the screenshot box is greater than a half of an area of the linear layout 1. Therefore, the linear layout 1 is also determined as the target page element.

Optionally, the method further includes: When the second page elements do not exist, the electronic device determines whether the overlapping area between the first page element and the screenshot box is greater than the preset value. When the overlapping area between the first page element and the screenshot box is greater than the preset value, the electronic device determines the first page element as the target page element. In other words, if no other page element exists at a level lower than the level of the first page element, whether the first page element is the target page element is directly determined based on the overlapping area between the first page element and the screenshot box. Based on this manner, completeness of screenshot content can be ensured.

S403: The electronic device generates a first screenshot image based on the one or more target page elements.

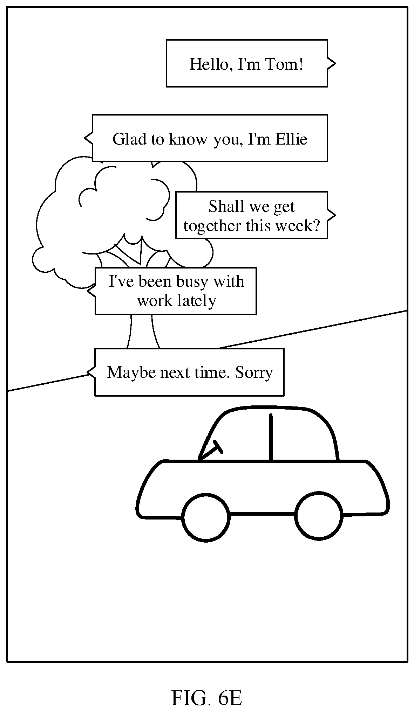

For example, the target page elements currently determined by the electronic device include the frame layout 1, the background image component 1, the linear layout 1, the relative layout 1, and the text component 1, and the electronic device continues to determine other page elements of the screenshot page in the manner described above, to determine all the target page elements. The electronic device may generate, by using these target page elements, a screenshot image shown in FIG. 6E.

In a possible implementation, a specific implementation in which the electronic device generates a first screenshot image based on the one or more target page elements may be: generating a preview screenshot image based on the one or more target page elements, where the preview screenshot image includes the one or more target page elements; displaying the preview screenshot image; when a delete operation performed by a user on a third page element in the preview screenshot image is received, removing, from the preview screenshot image, the third page element deleted through the delete operation, to obtain the first screenshot image, where the third page element is any one of the one or more target page elements; and when a delete operation performed by the user on the third page element is not received, determining the preview screenshot image as the first screenshot image. In other words, the user may perform a delete operation on content in the preview screenshot image based on a requirement of the user, so that required screenshot information can be further ensured, flexibility of a screenshot image is improved, and user experience is improved.

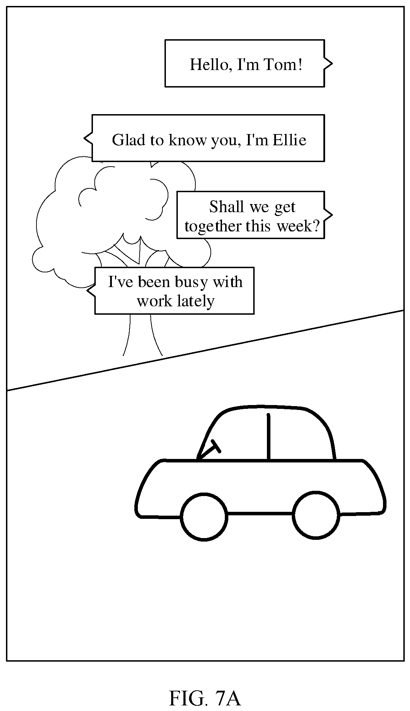

For example, the screenshot image shown in FIG. 6E and displayed by the electronic device may be considered as a preview screenshot image. It may be assumed that the user chooses to perform a delete operation on a last text component in the preview screenshot image, and then a screenshot image shown in FIG. 7A is obtained.

In a possible implementation, a specific implementation in which the electronic device generates a first screenshot image based on the one or more target page elements may be: when the one or more target page elements do not include preset page elements, obtaining prestored elements corresponding to the preset page elements; and generating the first screenshot image based on the one or more target page elements and the prestored elements. In other words, some special information (such as privacy information) may be supplemented or replaced by using preset information, so as to improve privacy, completeness, and aesthetics of the screenshot image.

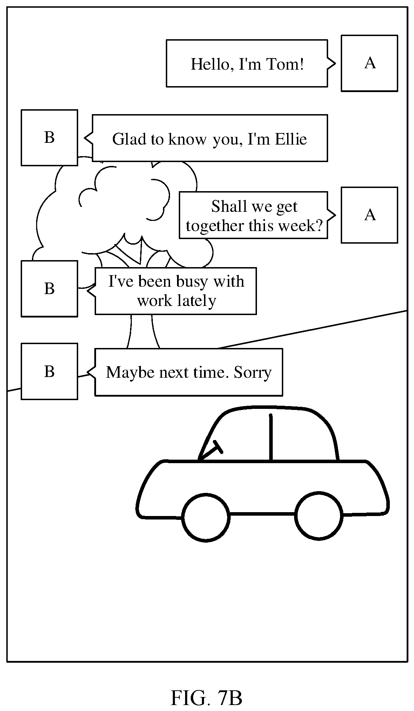

For example, it is assumed that the screenshot page is a chat page, and the preset page elements are the avatar component 1 and an avatar component 2. A plurality of target page elements in the screenshot image shown in FIG. 6E are obtained according to the method described in the foregoing steps S401 to S403. However, because the plurality of target page elements do not include the avatar component 1 and the avatar component 2, to ensure completeness and aesthetics of the chat page, an avatar component A and an avatar component B that are prestored in a system may be obtained, where the avatar component 1 corresponds to the avatar component A, and the avatar component 2 corresponds to the avatar component B. Then, the screenshot image shown in FIG. 7B is generated by using the avatar component A, the avatar component B, and the plurality of target page elements.

In a possible implementation, a specific implementation in which the electronic device generates a first screenshot image based on the one or more target page elements may be: determining a fourth page element from the one or more target page elements, where the fourth page element is a page element with a smallest area in the target page elements that completely include the screenshot box; and generating the first screenshot image based on the fourth page element and a fifth page element, where the fifth page element is a page element, in the one or more target page elements, at a level lower than a level of the fourth page element. In other words, the electronic device may select only some target page elements that completely include the screenshot box and retain the target page elements, and discard unnecessary target page elements, thereby improving aesthetics of a screenshot image and intelligence of a screenshot function, and improving user experience.

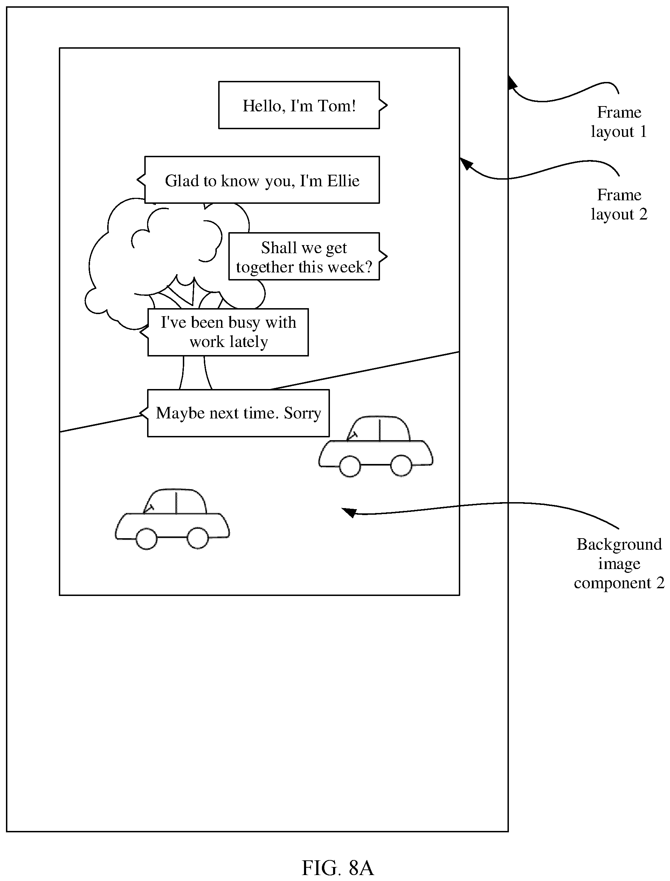

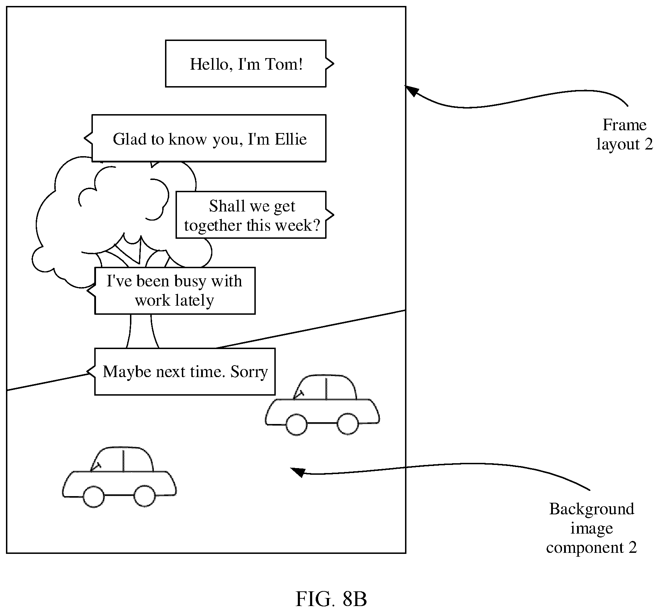

For example, the plurality of target page elements in the screenshot image shown in FIG. 8A are obtained according to the method described in the foregoing steps S401 to S403. Target page elements that completely include the screenshot box include the frame layout 1, a frame layout 2, and a background image component 2, and the frame layout 2 and the background image component 2 are page elements with a smallest area in the target page elements that completely include the screenshot box. Therefore, a screenshot image shown in FIG. 8B may be generated by using the frame layout 2 and the background image component 2, and page elements (such as a linear layout, a relative layout, and a text component) at levels lower than levels of the frame layout 2 and the background image component 2 in the plurality of target page elements. The frame layout 1 that is unnecessary is discarded from the screenshot image.

Optionally, the method further includes: The electronic device displays a background recommendation interface, where the background recommendation interface includes one or more background images. When receiving a select operation performed by the user on a first background image, the electronic device updates a background image in the first screenshot image to the first background image. The first background image is any one of the one or more background images. In other words, the electronic device may recommend a background image to the user for selection, and the user may adjust a background of the screenshot image based on a requirement of the user, thereby improving user experience.

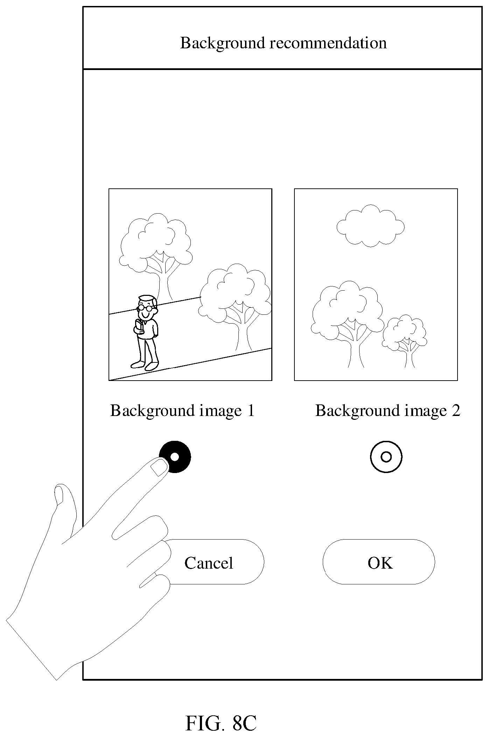

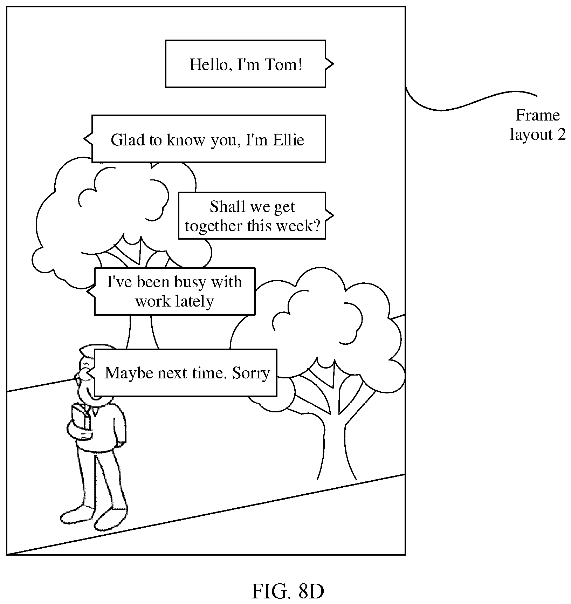

FIG. 8C shows a user interface for background recommendation according to an embodiment of this application. The user interface for background recommendation includes a background image 1, a background image 2, a confirm button, and a cancel button. When the user triggers selection of the background image 1, it indicates that the user expects to update a background of a current screenshot image (as shown in FIG. 8B) to the background image 1. Therefore, the electronic device generates a screenshot image shown in FIG. 8D. Certainly, the user may further confirm a selection result by using the confirm button, or may cancel the selection result by using the cancel button.

Optionally, the one or more background images are determined based on content in a page element in the first screenshot image. Based on this manner, personalization of a screenshot image and intelligence of a screenshot function can be improved.

For example, it is assumed that text information in the first screenshot image is related to a movie, and the background image may be a poster of the movie.

For another example, it is assumed that image information in the first screenshot image is related to a tree, and the background image may be another image of the tree.

Optionally, the method further includes: The electronic device adjusts the background image in the first screenshot image based on a preset object. In other words, the electronic device may perform aesthetic analysis on the background image in the first screenshot image, that is, perform cropping adjustment on the background image in the first screenshot image by using the preset object as a center, to improve aesthetics of the screenshot image. For example, the preset object may be a person, a plurality of trees, or a road.

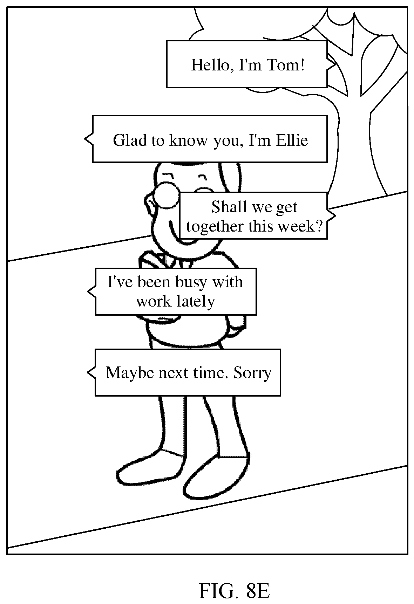

For example, it is assumed that an area of the frame layout 2 in the screenshot image shown in FIG. 8D is less than a preset value, and content of a background image in the screenshot image is also complex (including a person, a plurality of trees, a road, and the like). Therefore, the background image in the screenshot image may be cropped by using a person (namely, a preset object) as a center, to obtain a screenshot image shown in FIG. 8E.

In a possible implementation, the method further includes: The electronic device displays a screenshot saving interface. The screenshot saving interface includes a first option and a second option. When receiving a select operation performed by the user on the first option, the electronic device generates a second screenshot image, and saves the first screenshot image and the second screenshot image. The second screenshot image includes image content in the screenshot box on the screenshot page, and does not include image content outside the screenshot box on the screenshot page. The electronic device saves the first screenshot image when receiving the select operation performed by the user on the second option. Based on this manner, the user can select a screenshot image that needs to be saved, thereby improving user experience.

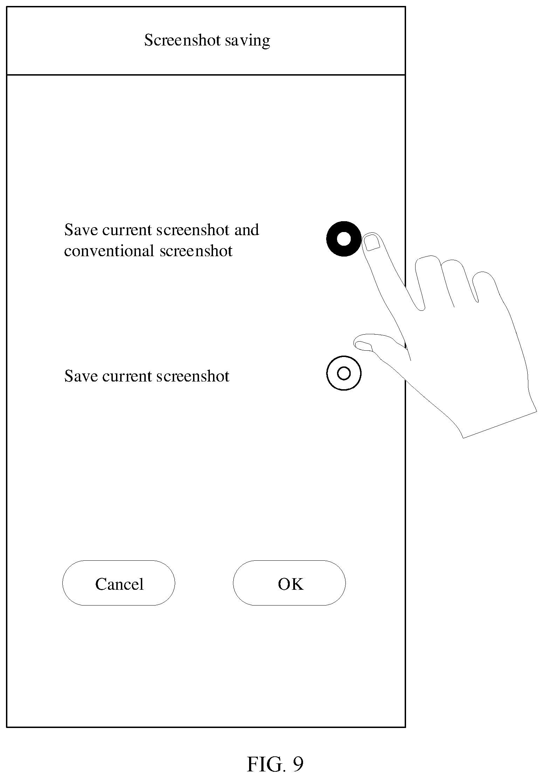

FIG. 9 shows a user interface for saving a screenshot according to an embodiment of this application. The user interface for saving the screenshot includes a first option button, a second option button, a confirm button, and a cancel button. When the user triggers selection of the first option button, it indicates that the user wants to save a current screenshot (namely, the first screenshot image, as shown in FIG. 6E) and a conventional screenshot (namely, the second screenshot image, as shown in FIG. 1B). Therefore, the electronic device generates the second screenshot image, and saves the second screenshot image together with the first screenshot image. When the user triggers selection of a second selection button, it indicates that the user only wants to save a current screenshot. Therefore, the electronic device directly saves the currently generated first screenshot image. Certainly, the user may further confirm a selection result by using the confirm button, or may cancel the selection result by using the cancel button.

Optionally, the method includes: The electronic device obtains the saved first screenshot image. The electronic device performs editing processing on the saved first screenshot image to obtain a third screenshot image. In other words, the electronic device may provide an editing function for the saved screenshot image, and the user may re-edit the saved screenshot image at any time based on a requirement of the user. This helps improve flexibility of the screenshot image and improve user experience.

For example, the electronic device may save a color of each pixel in the first screenshot image in an RGB color mode, and store a relative relationship between pixels as additional data of the first screenshot image in an interchangeable image file format (exchangeable image file format, EXIF). When the user needs to re-edit the stored first screenshot image, the user may re-edit the first screenshot image by using the stored color of each pixel and the EXIF file.

In a possible implementation, the method further includes: When receiving a sharing operation performed by the user on the first screenshot image, the electronic device sends the first screenshot image to a preset contact. Based on this manner, sharing of a screenshot image can be improved, thereby improving user experience.

In a possible implementation, the method further includes: determining, in the first screenshot image, text information that is not included in the screenshot box; and performing blur processing on the text information to obtain a third screenshot image. Based on this manner, completeness of screenshot content is ensured, and accuracy and privacy of the screenshot image are improved, thereby improving user experience.

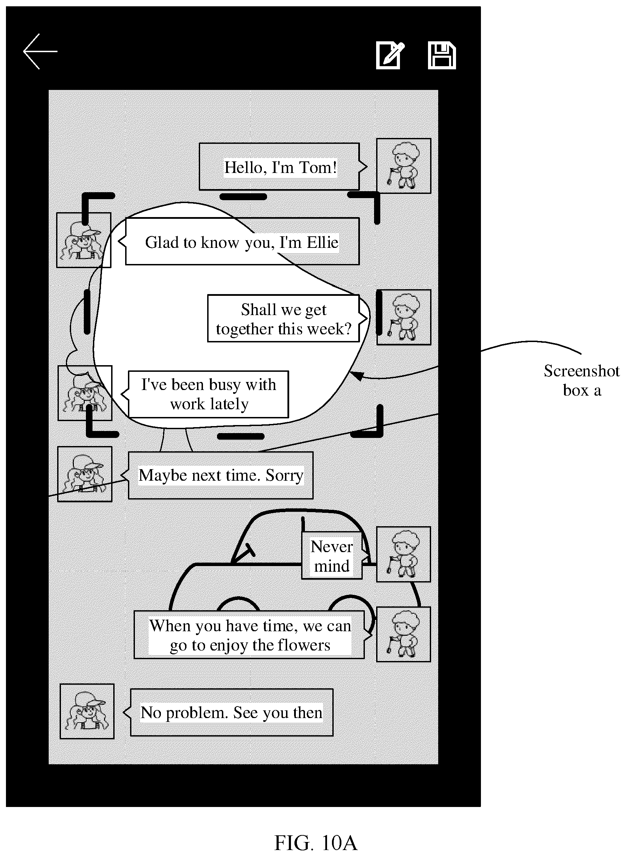

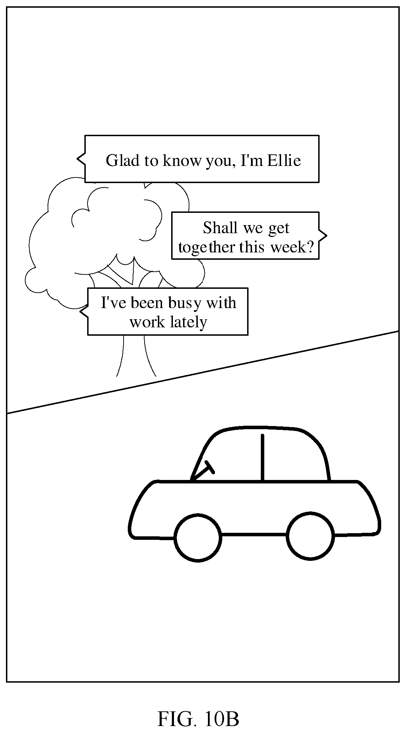

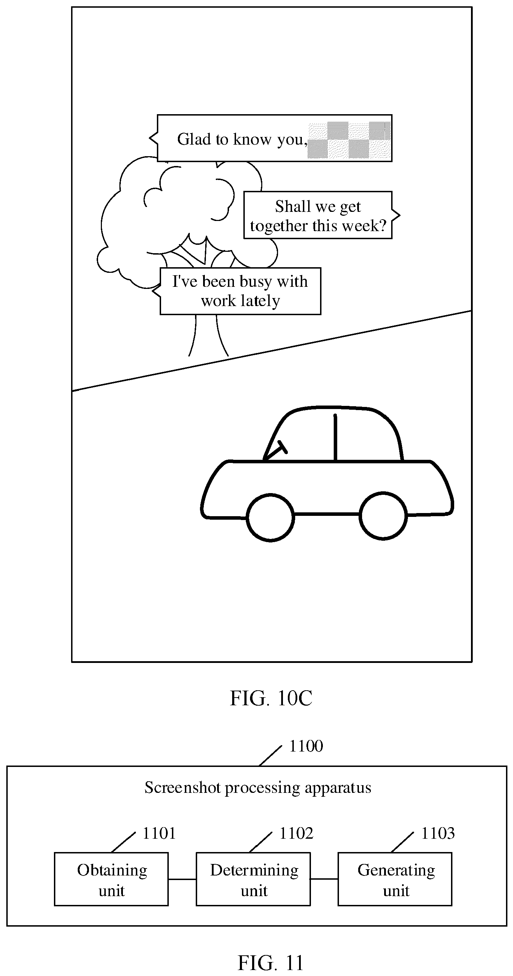

As shown in FIG. 10A, a user specifies a screenshot box a on a screenshot page. After detecting a screenshot operation of the user, the electronic device performs steps S401 to S403, to obtain a screenshot image shown in FIG. 10B. However, actually, the user does not include text information "I am Ellie" in the screenshot box, in other words, the user does not want to capture the text information. If the user performs the delete operation mentioned above, only an entire text component "Glad to know you. I am Ellie" can be deleted. Therefore, the electronic device may perform blur processing on text information "I am Ellie" that is in the screenshot image shown in FIG. 10B and that is not included in the screenshot box, to obtain a screenshot image shown in FIG. 10C.

In the method described in FIG. 4, after the screenshot operation is detected, the position information of the screenshot box on the screenshot page and the layout information of the screenshot page are obtained, page elements on the screenshot page are selected by using the position information of the screenshot box on the screenshot page and the layout information of the screenshot page, and a screenshot image is generated by using a retained page element. Because each page element is analyzed and determined, and completeness of the page element and an association between page elements are also considered when a screenshot range specified by the user is considered, instead of directly retaining only screenshot content specified by the user, thereby avoiding a case in which some page elements are abandoned to cause incompleteness. Therefore, the method can be used to ensure completeness and association of the screenshot content, and improve screenshot effect and user experience.

FIG. 11 is a diagram of a structure of a screenshot processing apparatus according to an embodiment of this application. The apparatus shown in FIG. 11 may be configured to perform some or all functions of the electronic device in the method embodiment described in FIG. 4. The apparatus may alternatively be a chip system. The screenshot processing apparatus 1100 shown in FIG. 11 may include an obtaining unit 1101, a determining unit 1102, and a generating unit 1103. Optionally, the screenshot processing apparatus 1100 may further include a processing unit, configured to process data information.

The obtaining unit 1101 is configured to: after a screenshot operation is detected, obtain position information of a screenshot box on a screenshot page and layout information of the screenshot page, where the screenshot page includes one or more page elements, and the layout information of the screenshot page includes a level relationship and position information of the one or more page elements.

The determining unit 1102 is configured to determine one or more target page elements from the one or more page elements based on the position information of the screenshot box on the screenshot page and the layout information of the screenshot page.

The generating unit 1103 is configured to generate a first screenshot image based on the one or more target page elements.

In a possible implementation, when determining the one or more target page elements from the one or more page elements based on the position information of the screenshot box on the screenshot page and the layout information of the screenshot page, the determining unit 1102 may be specifically configured to: traverse the page elements in descending order of levels of the page elements, and determine, based on the position information of the screenshot box on the screenshot page and position information of a currently traversed first page element, whether the screenshot box is completely included in the first page element; and when the screenshot box is completely included in the first page element, determine the first page element as the target page element.

In a possible implementation, the determining unit 1102 is further configured to: when the screenshot box is not completely included in the first page element, and the screenshot box and the first page element have intersection points, determine whether second page elements exist on the screenshot page, where the second page elements are page elements at levels lower than a level of the first page element; when the second page elements exist, traverse the second page elements in ascending order of the levels of the second page elements, and determine whether an overlapping area between a currently traversed second page element and the screenshot box is greater than a preset value; and when the overlapping area between the currently traversed second page element and the screenshot box is greater than the preset value, determine the currently traversed second page element as the target page element.

In a possible implementation, after all the second page elements are traversed, the determining unit 1102 is further configured to: determine whether an overlapping area between the first page element and the screenshot box is greater than the preset value; and when the overlapping area between the first page element and the screenshot box is greater than the preset value, determine the first page element as the target page element.

In a possible implementation, the determining unit 1102 is further configured to: when the second page elements do not exist, determine whether the overlapping area between the first page element and the screenshot box is greater than the preset value; and when the overlapping area between the first page element and the screenshot box is greater than the preset value, determine the first page element as the target page element.

In a possible implementation, when generating the first screenshot image based on the one or more target page elements, the generating unit 1103 may be specifically configured to: generate a preview screenshot image based on the one or more target page elements, where the preview screenshot image includes the one or more target page elements; display the preview screenshot image; when a delete operation performed by a user on a third page element in the preview screenshot image is received, remove, from the preview screenshot image, the third page element deleted through the delete operation, to obtain the first screenshot image, where the third page element is any one of the one or more target page elements; and when a delete operation performed by the user on the third page element is not received, determine the preview screenshot image as the first screenshot image.

In a possible implementation, the apparatus further includes a processing unit. The processing unit is configured to: display a screenshot saving interface, where the screenshot saving interface includes a first option and a second option; when a select operation performed by the user on the first option is received, generate a second screenshot image, and save the first screenshot image and the second screenshot image, where the second screenshot image includes image content in the screenshot box on the screenshot page, and does not include image content outside the screenshot box on the screenshot page; and save the first screenshot image when the select operation performed by the user on the second option is received.

In a possible implementation, the processing unit is further configured to: determine, in the first screenshot image, text information that is not included in the screenshot box; and perform blur processing on the text information to obtain a third screenshot image.

This embodiment of the present invention and the method embodiment shown in FIG. 4 are based on a same concept, and produce a same technical effect. For a specific principle, refer to the description in the embodiment shown in FIG. 4, and details are not described herein.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted by using the computer-readable storage medium. The computer instructions may be transmitted from a website, computer, server, or data center to another website, computer, server, or data center in a wired manner (for example, by using a coaxial cable, an optical fiber, or a digital subscriber line) or in a wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

Persons of ordinary skill in the art may understand that all or some of the processes of the methods in embodiments may be implemented by a computer program instructing relevant hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

In the foregoing embodiments, the description of each embodiment has respective focuses. For a part that is not described in detail in an embodiment, refer to related descriptions in other embodiments.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A screenshot processing method, wherein the method comprises:
after a screenshot operation is detected, obtaining position information of a screenshot box on a screenshot page and layout information of the screenshot page, wherein the screenshot page comprises one or more page elements, and the layout information of the screenshot page comprises a level relationship and position information of the one or more page elements;
determining one or more target page elements from the one or more page elements based on the position information of the screenshot box on the screenshot page and the layout information of the screenshot page; and
generating a first screenshot image based on the one or more target page elements.

2. The method according to claim 1, wherein the determining one or more target page elements from the one or more page elements based on the position information of the screenshot box on the screenshot page and the layout information of the screenshot page comprises:
traversing the page elements in descending order of levels of the page elements, and determining, based on the position information of the screenshot box on the screenshot page and position information of a currently traversed first page element, whether the screenshot box is completely comprised in the first page element; and
when the screenshot box is completely comprised in the first page element, determining the first page element as the target page element.

3. The method according to claim 2, wherein the method further comprises:
when the screenshot box is not completely comprised in the first page element, and the screenshot box and the first page element have intersection points, determining whether second page elements exist on the screenshot page, wherein the second page elements are page elements at levels lower than a level of the first page element;
when the second page elements exist, traversing the second page elements in ascending order of the levels of the second page elements, and determining whether an overlapping area between a currently traversed second page element and the screenshot box is greater than a preset value; and
when the overlapping area between the currently traversed second page element and the screenshot box is greater than the preset value, determining the currently traversed second page element as the target page element.

4. The method according to claim 3, wherein after all the second page elements are traversed, the method further comprises:
determining whether an overlapping area between the first page element and the screenshot box is greater than the preset value; and
when the overlapping area between the first page element and the screenshot box is greater than the preset value, determining the first page element as the target page element.

5. The method according to claim 3 or 4, wherein the method further comprises:
when the second page elements do not exist, determining whether the overlapping area between the first page element and the screenshot box is greater than the preset value; and
when the overlapping area between the first page element and the screenshot box is greater than the preset value, determining the first page element as the target page element.

6. The method according to any one of claims 1 to 5, wherein the generating a first screenshot image based on the one or more target page elements comprises:
generating a preview screenshot image based on the one or more target page elements, wherein the preview screenshot image comprises the one or more target page elements;
displaying the preview screenshot image;
when a delete operation performed by a user on a third page element in the preview screenshot image is received, removing, from the preview screenshot image, the third page element deleted through the delete operation, to obtain the first screenshot image, wherein the third page element is any one of the one or more target page elements; and
when a delete operation performed by the user on the third page element is not received, determining the preview screenshot image as the first screenshot image.

7. The method according to any one of claims 1 to 6, wherein the method further comprises:
displaying a screenshot saving interface, wherein the screenshot saving interface comprises a first option and a second option;
when a select operation performed by the user on the first option is received, generating a second screenshot image, and saving the first screenshot image and the second screenshot image, wherein the second screenshot image comprises image content in the screenshot box on the screenshot page, and does not comprise image content outside the screenshot box on the screenshot page; and
saving the first screenshot image when the select operation performed by the user on the second option is received.

8. The method according to any one of claims 1 to 7, wherein the method further comprises:
determining, in the first screenshot image, text information that is not comprised in the screenshot box; and
performing blur processing on the text information to obtain a third screenshot image.

9. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 8.

10. A computer storage medium, wherein the computer storage medium stores a computer program, the computer program comprises program instructions, and when the program instructions are run on an electronic device, the electronic device is enabled to perform the method according to any one of claims 1 to 8.

11. A computer program product, wherein when the computer program product runs on a computer, the computer is enabled to perform the method according to any one of claims 1 to 8.
